# EUROPEAN PATENT SPECIFICATION

(11) **EP 4 423 584 B1**
(45) Date of publication and mention of the grant of the patent: **13.08.2025**
(21) Application number: 22808837.3
(22) Date of filing: 27.10.2022
(51) Int. Cl.: G05D 7/06

(54) **BATTER PRODUCTION SYSTEM, BATTER PRODUCTION DEVICE AND METHOD**
TEIGHERSTELLUNGSSYSTEM, TEIGHERSTELLUNGSVORRICHTUNG UND VERFAHREN
SYSTÈME DE PRODUCTION DE PÂTE À FRIRE, DISPOSITIF ET PROCÉDÉ DE PRODUCTION DE PÂTE À FRIRE

(30) Priority: 28.10.2021 NL 2029542
(43) Date of publication of application: 04.09.2024
(73) Proprietor: Marel Further Processing B.V., 5831 AV Boxmeer (NL)
(72) Inventor: MEULENDIJKS, Johannes, Martinus, 5831 AV BOXMEER (NL); TOONEN, Nick Hubertus, 5831 AV BOXMEER (NL)
(74) Representative: EP&C
(86) International application number: PCT/EP2022/080127
(87) International publication number: WO 2023/073127

(56) References cited:
- EP-A1- 1 392 420
- EP-B1- 1 392 420
- US-A1- 2002 020 343
- US-B2- 11 096 411

## Description

The present invention relates to a batter production device and a method for producing a batter for coating a food product.

Food products, like meat or fish, often need to be coated with a batter before further processing or freezing the food product. A batter can be any fluid and/or paste-like substance intended to coat the food product wholly or partially. Batters may, for example, comprise milk, water, oil, or any other suitable carrier liquid, optionally combined with flour, herbs, fragrances or the like. Before applying the batter to the food product, the batter is produced by mixing a fresh liquid, for example water, with a pulverulent material, for example breadcrumbs.

EP1392420 discloses a batter production device wherein the flowable component of the starting material for preparing protein coating is fed to the mixing vessel in dosed fashion via a feed line in which a flowmeter and a control valve are incorporated. The outlet of the mixing vessel is also connected to a circulation line. This circulation line is used to enable the viscosity of the batter in the mixing vessel to be measured continuously or intermittently. This circulation line is not connected to the liquid supply system for supplying fresh liquid.

US 11,096,411 B2 describes a coating apparatus for coating a food product with a batter. The coating apparatus has a batter container for receiving the batter. The batter is pumped from the batter container to a batter application means that coats the food product with the batter.

It is an object of the present invention to provide an improved batter production device and a method for producing a batter for coating a food product by mixing a fresh liquid and a pulverulent material to form a batter.

Accordingly, a batter production device according to claim 1 is provided, i.e. a batter production device for producing a batter by mixing a fresh liquid and a pulverulent material to form a batter for coating a food product, comprising:
- a container for receiving a predetermined amount of fresh liquid and a dosage of pulverulent material,
- an agitator that is installed in or on the container and immersed into the container for mixing the fresh liquid and the pulverulent material to form the batter,
- a liquid supply system for supplying the predetermined amount of fresh liquid to the container, comprising:
   ∘ an upstream supply tube for the supply of fresh liquid,
   ∘ a downstream main tube with a first outlet and associated main valve for receiving fresh liquid from the supply tube and discharging into the container,

a flow meter for determining the amount of fresh liquid that flows by,
   - a control system in connection with the main valve and the flow meter and to which the predetermined amount of fresh liquid is inputted, which control system is operable to fill the container with the predetermined amount of fresh liquid,
characterized in that the liquid supply system further comprises a downstream auxiliary tube with a second outlet and associated auxiliary valve also receiving fresh liquid from the supply tube and discharging into the container, wherein the auxiliary tube has a smaller cross-section than the main tube and/or wherein the auxiliary valve has a smaller discharge cross-section than the main valve, so that - in use - fresh liquid is discharged from the first outlet at a first volumetric flow rate and from the second outlet at a second volumetric flow rate which is smaller than the first volumetric flow rate, the auxiliary valve also being in connection with the control system, and wherein the main valve and auxiliary valve are operable independent from each other,
and wherein the control system is configured to cause a pre-fill of the container at least via the main tube and to cause an end-fill of the container only via the auxiliary tube.

Since a main tube and an auxiliary tube are provided, it is possible to initially fill the container quickly by means of the main tube or both the main tube and the auxiliary tube together.

When the container is filled almost with the predetermined amount of fresh liquid, the main tube is closed by the main valve and only the auxiliary tube is left open to end-fill the container only via the auxiliary tube. By using the auxiliary tube having a relatively small discharge cross-section for a relatively small volumetric flow rate and/or the auxiliary valve having a smaller discharge cross-section than the main valve, it is possible to fill the container to the predetermined amount of fresh liquid with a high accuracy.

As a consequence, the batter production device produces batches of batter having a reproducible composition.

The term "food product" comprises a large range of different products. In particular it is intended to comprise at least products intended for human or animal consumption, such as protein-based products of any origin and structure, such as e.g., minced, sliced, formed and/or whole muscle or organ products from e.g., poultry, fish, vegetable and/or other meat protein sources.

The term "batter" in this context can mean any fluid and/or paste-like substance intended to coat the food product wholly or partially, e.g., to enable adhering a subsequent dry-coating to a surface of the food product and/or to develop as a baked crust in a heat treatment. Batters may, for example, comprise milk, water, oil or any other suitable carrier liquids, optionally combined with e.g., flour, herbs, fragrances and the like. Examples of batter include general-purpose batter, tempura batter and marinades. The batter can be a mixture of a pulverulent material, like breadcrumbs or flour, with a liquid material, like water. The batter may further comprise a temperature-activated agent such as baking powder or the like to have a tempura-style batter.

A "fresh liquid" in this case is a fluid like water, oil, beer, egg products or the like. Preferably, the liquid is water. The liquid can be a composition of several fluids, like for example a suspension of oil and water. The term 'fresh liquid' is used as opposed to recycled batter fluid. A "pulverulent material" in this context means a powder-like material like flour, breadcrumbs, or the like. The pulverulent material can be named powder or particles.

The batter production device is designed to mix the fresh liquid and the pulverulent material to form the batter. The batter is formed by mixing the liquid and the pulverulent material inside the container. The container can be barrel-shaped or the like.

The agitator is installed in or on the container and immersed into the container for mixing the liquid and the pulverulent material to form the batter. In embodiments, a drive element is provided to turn the agitator around an axis of rotation to mix the fresh liquid and the pulverulent material. In embodiments, the agitator is connected to the control system. The mixing of the batter can be performed automatically.

The liquid supply system is designed to supply the fresh liquid to the container. It has an upstream supply tube for the supply of fresh liquid. "Upstream" in this context means when seen along a flow direction of the liquid through the liquid supply system. This means that the supply tube is arranged prior to the main and auxiliary tube.

Downstream of the supply tube, the liquid supply system has at least a main tube and an auxiliary tube discharging into the container. The liquid supply system can have more than these two tubes discharging into the container. It is conceivable that a tube has a bent or curved geometry. The main tube and the auxiliary tube preferably discharge directly into the container. **It** is conceivable that a funnel is provided via which the liquid is discharged. In embodiments, the main tube and the auxiliary tube discharge into the container at remote locations. It is also conceivable that the main tube and the auxiliary tube are provided in each others vicinity, or even connected to each other.

In embodiments, the upstream supply tube splits into the downstream main tube and auxiliary tube. Accordingly, either the main tube or the auxiliary tube can be bypassed. For example, the main tube and auxiliary tube are provided in parallel to each other, and possibly also parallel to the supply tube.

Alternatively, the supply tube, the auxiliary tube and main tube are positioned in series. The auxiliary tube is provided at a downstream end of the supply tube, and the main tube further downstream. When the auxiliary valve is closed, fluid can only exit the supply tube via the main tube, and when the main valve is closed, fluid can only exit the supply tube via the auxiliary tube. This configuration also allows either the main tube or the auxiliary tube to be bypassed.

In embodiments, the liquid supply system is arranged such that the flow meter is arranged below the main and auxiliary valves when seen along the direction of gravity. In other words, there always lasts hydrostatic pressure on the liquid in the flow meter. This increases the accuracy of flow meter measurements. No air bubbles can be trapped in the flow meter.

In embodiments, the liquid supply system further comprises a main flow meter in the main tube and/ or the supply tube and an auxiliary flow meter in the auxiliary tube.

The main tube has a first outlet and associated main valve for receiving fresh liquid from the supply tube and discharging into the container. The auxiliary tube has a second outlet and associated auxiliary valve, and also receives fresh liquid from the supply tube and discharges into the container. The auxiliary tube has a smaller cross-section than the main tube and/or wherein the auxiliary valve has a smaller discharge cross-section than the main valve, so that - in use - fresh liquid is discharged from the first outlet at a first volumetric flow rate and from the second outlet at a second volumetric flow rate which is smaller than the first volumetric flow rate.

The "volumetric flow rate", also referred to as "volume flow rate", "rate of fluid flow" or "volume velocity" in this context has to be understood as a volume of a fluid, namely the fresh liquid, which passes per unit time through a tube and its associated valve when open. The volumetric flow rate is depending on a cross-sectional area of the tube and valve. The bigger the cross-sectional area is, the bigger the volumetric flow rate is. Since the main tube and valve have a relatively large cross-section compared to the cross-section of the auxiliary tube and valve, more liquid can pass through the main tube and valve as it does in the same time unit through the auxiliary tube and valve.

The main tube and the auxiliary tube can both have a circular cross-section. However, the geometry of the cross-section can be shaped in any way. The relatively large cross section of the main tube enables it to fill the container very fast via the main tube. In other words, the container is pre-filled only via the main tube or via the main tube as well as the auxiliary tube. When the predetermined amount of liquid is almost reached, the main tube is closed and only the auxiliary tube is left open so that the container is end-filled only via the auxiliary tube. This enables an exact dosing of the liquid.

"Pre-filled" or "initially filled" in this context means a quick filling of the container. As soon as the predetermined amount of fresh liquid is almost reached, the main tube is closed. Thus, the container is then topped up to the predetermined amount of fresh liquid solely via the auxiliary tube. "End-filled" in this context means that the container is filled slowly until the predetermined amount of liquid is reached.

End-filling with a relatively small volumetric flow rate increases the accuracy of the amount of fresh liquid discharged into the container. In order to fill the container with the predetermined amount of fresh liquid, the predetermined amount is inputted into the control system. According to the invention, the control system is in connection with the flow meter and is operable to close the main valve when the flow meter indicates that almost the predetermined amount of liquid has past the flow meter, e.g. 90%-95% of the predetermined amount. The control system is operable to close the auxiliary valve when the flow meter indicates that 100% of the predetermined amount of fresh liquid has past the flow meter. By operating the auxiliary valve at the end, associated with a relatively small flow rate, the accuracy of the amount of liquid that is discharged is improved in comparison to the control system only operating the main valve, associated with a relatively large flow rate. Hence, the composition of the produced batter is more accurate and therefor batches of batter are better reproducible.

The predetermined amount of fresh liquid can be provided by the control system for a particular batch of batter that has to be produced. For example, the predetermined amount of liquid is taken from a database further comprising a corresponding predetermined dosage of pulverulent material to obtain a particular batch of batter for a following coating process of the food product. It is also conceivable that the predetermined amount of liquid is manually inputted on any human-machine interface of the control system. The database may contain desired ratios between liquid and pulverulent, in addition to or instead of discrete amounts of liquid and pulverulent.

The fresh liquid is conveyed to the container via the liquid supply system. In embodiments, the control system also determines or calculates the dosage of pulverulent material needed for the batch that is to be produced. In embodiments, a pulverulent supply device is provided to supply this predetermined dosage of pulverulent material.

In alternative embodiments, prior to supplying the pulverulent material to the container, the dosage of pulverulent material that is to be supplied to the container is measured, followed by on the basis hereof determining the predetermined amount of fresh liquid. It is both possible to first fill the container with pulverulent material and then liquid, or first with fresh liquid and then with pulverulent material.

In embodiments, it has been found that the accuracy of the input of the flow meter to the control system is improved by calibration. To this end, in embodiments level sensors and a pulse counter are provided. An amount of liquid is supplied to the container and the pulses of the flow meter generated by this supply flow are counted. In the container, one or more level sensors are provided to accurately determine the amount of liquid that is supplied, advantageously the predetermined amount of fresh liquid required for the batch of batter that is to be produced. The amount of pulses corresponding to this accurately determined amount of water can be used as input for the control system. The control system in connection with the flow meter is now inputted with a number of pulses, which has proven to be more accurate than the volumetric output of the flow meter.

Advantageously, the main and auxiliary valve can be brought into an arbitrary number of intermediate states between the open state and the closed state. This means that a valve can be opened and closed stepless. Accordingly, a valve can partly reduce the cross-section to reduce the volumetric flow rate passing the tube and associated valve.

In embodiments, the control system communicates with one or more of sensors of the batter production device, e.g. level sensors. Advantageously, the control system is also designed to control liquid pumps, electric motors, or the like of the batter production device.

In embodiments, the liquid supply system further comprises a main liquid pump in the main tube and/ or the supply tube and an auxiliary liquid pump in the auxiliary tube.

The batter production device is advantageously part of a batter production system, together with a pulverulent supply device for supplying the dosage of pulverulent.

In embodiments, the control system is in connection with the pulverulent supply device and the dosage of pulverulent material is inputted into the control system, which control system is operable to fill the container with the dosage of pulverulent material.

In embodiments, the pulverulent supply device comprising a storage for storing a batch of pulverulent material and a conveyor for conveying the batch of pulverulent material to the container. Optionally a weigher is provided for detecting a weight of the batch of pulverulent material.

Advantageously, the weigher is connected to the control system and the control system is operable to fill the storage with the dosage of pulverulent material.

"Batch" in this context means a certain amount of batter. One batch e.g. includes 50 - 200 liters. Advantageously, the storage is designed to receive a dosage of pulverulent material to produce one batch of batter for a following coating process of the food product.

The conveyor can be any suitable transport conveyor such as a screw or belt conveyor. The conveyor can be arranged horizontally. Thus, the conveyor can be named horizontal conveyor.

The weigher enables to exactly fill the batch storage with the needed dosage of pulverulent material. The accuracy of the composition of the batter, and thus the reproducibility of batches of batter is increased with the accuracy of the dosage of pulverulent. Hence, an accurate weigher such as including load cells is preferred. The number of load cells is arbitrary. In embodiments, there is provided more than one load cell, e.g. there are provided three load cells, e.g. arranged in a triangular way. In embodiments, load cells are provided below the storage, wherein the weight of the storage and the pulverulent material included in the storage rests on the load cells.

The accuracy of the dosage of pulverulent is further improved when the entire dosage of pulverulent as weighed by the weigher is supplied to the container. To this end, any sticking including static cling to the storage or conveyor is to be prevented. In embodiments, the inner walls of the storage are smooth, advantageously polished, e.g. by electropolishing, or coated with a non-sticking coating.

It is also conceivable that the conveyor has been treated such as polished or coated to prevent any pulverulent material to be left behind.

The invention further relates to a method for producing a batter for coating a food product by means of a batter production device according to the preceding claims, the method comprising the following steps:
a1) supplying fresh liquid to the container via the main tube to pre-fill the container, followed by
a2) supplying fresh liquid to the container only via the auxiliary tube to end-fill the container until the predetermined amount of fresh liquid in the container is reached,
b) supplying the dosage of pulverulent material to the container, and
c) mixing the fresh liquid with the pulverulent material by means of the agitator to form the batter.

Advantageously, the control system controls all steps a1) to c) to be carried out automatically.

The dosage of pulverulent material and the amount of fresh liquid is calculated based on the needed batch of batter. During step a1), the liquid is supplied by both tubes. During step a2), the liquid is exclusively supplied by the auxiliary tube, to end-fill the container until the predetermined amount of liquid in the container is reached. In embodiments, the main valve in the main tube and the auxiliary valve in the auxiliary tube are both in the open state in step a1, during the supply of fresh liquid to the container via the main tube and the auxiliary tube to pre-fill the container. In alternative embodiments only the main valve is open and the auxiliary valve is closed. In step a2) the main valve is closed such that fresh liquid is supplied to the container only via the auxiliary tube to end-fill the container.

In other words, both valves are open in the initial state of filling the container very quickly with a big amount of liquid. After pre-filling the container, the main valve is closed, and only the auxiliary valve with the lower volumetric flow rate is kept open. This allows an exact dosing of the liquid to the container. The initial filling can also be done solely by means of the main valve and the main tube.

The order of adding the fresh liquid and the pulverulent material may be reversed, i.e. first steps a1) and a2) and then b) or alternatively first step b) and then steps a1) and a2). Step c), mixing the fresh liquid with the pulverulent material, can be performed after the completion of steps a2) and b), or during steps a1), a2) and b).

In embodiments, prior to supplying the dosage of pulverulent material to the container, the dosage of pulverulent material is determined, followed by on the basis hereof determining the predetermined amount of liquid.

In an alternative embodiment, the pulverulent material is supplied depending on the amount of liquid that has been supplied to the container.

Further aspects of the invention as described below further attribute to the accuracy of the composition of batter, and thus to the reproducibility of batches of batter. Distinct measures are presented, preventing unintended splashes of liquid, dust or particles of pulverulent material and/ or batter spattering into the conveyor or outside the container.

In a further aspect, the invention relates to a batter production system comprising a batter production device and a pulverulent supply device, the batter production device comprising:
- a container for receiving a predetermined amount of fresh liquid and a dosage of pulverulent material, the container having a fill opening at an upper end thereof,
- an agitator that is installed in or on the container and immersed into the container for mixing the fresh liquid and the pulverulent material to form the batter,
- a liquid supply system for supplying the predetermined amount of fresh liquid to the container,

the pulverulent supply device comprising:
   - a storage for storing a batch of pulverulent material,
   - a conveyor for conveying the batch of pulverulent material, the conveyor having an outlet opening arranged above the fill opening of the container for dispatching the pulverulent material into the container;
characterized in that the batter production system further comprises a splatter screen fitting with the fill opening of the container, which splatter screen is or can be provided at the fill opening.

Advantageously, the splatter screen is a three-dimensional wire grate having a height, the wire grate having a zigzag profile in the height direction.

In a method for producing a batter for coating a food product by means of a batter production system as described above, the method comprising the following steps:
a) providing the splatter screen at the fill opening of the container,
b) supplying the predetermined amount of fresh liquid to the container
c) supplying the dosage of pulverulent material to the container,
d) mixing the fresh liquid with the pulverulent material by means of the agitator to form the batter.

Advantageously, these steps are followed by:
e) removing the container with a batch of batter and the splatter screen;
f) providing a second container and a second splatter screen at the fill opening of the container,
g) repeating steps b)-d) to produce another batch of batter.

In yet a further aspect, the invention relates to a batter production system comprising a batter production device and a pulverulent supply device, the batter production device comprising:
- a container for receiving a predetermined amount of fresh liquid and a dosage of pulverulent material, the container having a fill opening at an upper end thereof,
- an agitator that is installed in or on the container and immersed into the container for mixing the fresh liquid and the pulverulent material to form the batter,
- a liquid supply system for supplying the predetermined amount of fresh liquid to the container,

the pulverulent supply device comprising:
   - a storage for storing a batch of pulverulent material,
   - a horizontal conveyor for conveying the batch of pulverulent material, the conveyor having an outlet opening arranged above the fill opening of the container for dispatching the pulverulent material into the container;
characterized in that the batter production system further comprises a funnel having an upper funnel opening fitting with the outlet opening of the conveyor and a lower funnel opening fitting with the fill opening of the container, which funnel is provided between the fill opening and the outlet opening.

In embodiments, the conveyor is a horizontal screw conveyor having an auger provided in a tubular housing and two auger bearings at opposed ends of the auger, and wherein the outlet opening of the conveyor is provided at a bottom end portion of the tubular housing.

In a method for producing a batter for coating a food product by means of a batter production system as described above, the method comprising the following steps:
a) providing the funnel between the fill opening and the outlet opening,
b) supplying the predetermined amount of fresh liquid to the container
c) supplying the dosage of pulverulent material to the container,
d) mixing the fresh liquid with the pulverulent material by means of the agitator to form the batter.

Preferably, the method is followed by:
e) removing the container with a batch of batter and the funnel;
f) providing a second container and a second funnel between the fill opening and the outlet opening,
g) repeating steps b)-d) to produce another batch of batter.

In yet a further aspect, the invention relates to a batter production system comprising a batter production device and a pulverulent supply device, the batter production device comprising:
- a container for receiving a predetermined amount of fresh liquid and a dosage of pulverulent material, the container having a fill opening at an upper end thereof,
- an agitator that is installed in or on the container and immersed into the container for mixing the fresh liquid and the pulverulent material to form the batter,
- a liquid supply system for supplying the predetermined amount of fresh liquid to the container,

the pulverulent supply device comprising:
   - a storage for storing a batch of pulverulent material,
   - a conveyor for conveying the batch of pulverulent material, the conveyor having an outlet opening arranged above the fill opening of the container for dispatching the pulverulent material into the container, wherein the conveyor is a horizontal screw conveyor having an auger provided in a tubular housing, a rear auger bearing at the storage end of the conveyor and a front auger bearing at an opposed head end of the tubular housing, and wherein the outlet opening of the conveyor is provided at an upstream head end of the tubular housing,
characterized in that the pulverulent supply device further comprises a flap cover provided at the outlet opening of the conveyor, which is hingedly mounted between an open position wherein the flap cover allows the passage of pulverulent material, and a closed vertical position wherein the flap cover covers the outlet opening, and wherein movement of the flap cover to the open position is actuated by the pulverulent material supplied by the auger, and movement to the closed position is actuated by gravity and the lack of supply of pulverulent material.

In embodiments, the flap cover is provided downstream of the front auger bearing, i.e. surrounding the front auger bearing. In alternative embodiments, the flap cover is provided upstream of the front auger bearing.

In embodiments, between the flap cover in the closed vertical position and the outlet opening a slit is provided, allowing the passage of residual amounts of pulverulent material.

In a method for producing a batter for coating a food product by means of a batter production system as described above, the method comprises the following steps:
a) providing a flap cover at the outlet opening of the conveyor,
b) supplying the predetermined amount of fresh liquid to the container,
c) supplying the dosage of pulverulent material to the container,
d) mixing the fresh liquid with the pulverulent material by means of the agitator to form the batter

Preferably, the method is followed by:
e) removing the container with a batch of batter and the flap cover, and
f) providing a second container and a second flap cover at the outlet opening of the conveyor,
g) repeating steps b)-d) to produce another batch of batter.

In yet a further aspect, the invention relates to a batter production system comprising a batter production device and a pulverulent supply device, the batter production device comprising:
- a container for receiving a predetermined amount of fresh liquid and a dosage of pulverulent material, the container having a fill opening at an upper end thereof,
- an agitator that is installed in or on the container and immersed into the container for mixing the fresh liquid and the pulverulent material to form the batter,
- a liquid supply system for supplying the predetermined amount of fresh liquid to the container,

the pulverulent supply device comprising:
   - a storage for storing a batch of pulverulent material,
   - a conveyor for conveying the batch of pulverulent material, the conveyor having an outlet opening arranged above the fill opening of the container for dispatching the pulverulent material into the container, wherein the conveyor is a horizontal screw conveyor having an auger provided in a tubular housing, a rear auger bearing at the storage end of the conveyor and a front auger bearing at the opposed head end of the tubular housing, and wherein the outlet opening of the conveyor is provided at an upstream head end of the tubular housing,
characterized in that the pulverulent supply device further comprises a releasably mounted dust hood, which is or can be provided at the outlet opening of the conveyor to entirely surround the outlet opening of the conveyor as well as the fill opening of the container.

In embodiments, the pulverulent supply device further comprises a flap cover provided at the outlet opening of the conveyor, which is hingedly mounted between an open position wherein the flap cover allows the passage of pulverulent material, and a closed vertical position wherein the flap cover covers the outlet opening, and wherein movement of the flap cover to the open position is actuated by the pulverulent material supplied by the auger, and movement to the closed position is actuated by gravity and the lack of supply of pulverulent material.

In embodiments, the flap cover is mounted to the dust hood and removable together with the dust hood.

In a method for producing a batter for coating a food product by means of a batter production system as described above, the method comprises the following steps:
a) providing a dust hood at the outlet opening of the conveyor such that the dust hood entirely surrounds the outlet opening of the conveyor as well as the fill opening of the container;
b) supplying the predetermined amount of fresh liquid to the container,
c) supplying the dosage of pulverulent material to the container,
d) mixing the fresh liquid with the pulverulent material by means of the agitator to form the batter

Advantageously, the method is followed by
e) removing the container with a batch of batter and the dust hood, and
f) providing a second container and a second dust hood at the outlet opening of the conveyor such that the dust hood entirely surrounds the outlet opening of the conveyor as well as the fill opening of the container;
g) repeating steps b)-d) to produce another batch of batter.

In a method for producing a batter for coating a food product by means of a batter production system as described above, the method comprises the following steps:
a) providing a flap cover mounted to a dust hood, and providing the combination at the outlet opening of the conveyor such that the dust hood entirely surrounds the outlet opening of the conveyor as well as the fill opening of the container, and the flap cover is provided at the outlet opening of the conveyor;
b) supplying the predetermined amount of fresh liquid to the container,
c) supplying the dosage of pulverulent material to the container,
d) mixing the fresh liquid with the pulverulent material by means of the agitator to form the batter.

Advantageously, the method is followed by:
e) removing the container with a batch of batter and the combination of dust hood and flap cover, and
f) providing a second combination of flap cover mounted to a dust hood, and providing the second combination at the outlet opening of the conveyor such that the dust hood entirely surrounds the outlet opening of the conveyor as well as the fill opening of the container, and the flap cover is provided at the outlet opening of the conveyor;
g) repeating steps b) - d) to produce another batch of batter.

The invention is further explained in the drawings, in which:
Fig. 1 shows a schematic perspective view of an embodiment of a batter production system;
Fig. 2 shows a schematic side view of the batter production system of Fig. 1;
Fig. 3 shows a further schematic side view of the batter production system of Fig. 1;
Fig. 4 shows a schematic detail view of the batter production system of Fig. 1;
Fig. 5 shows a further schematic detail view of the batter production system of Fig. 1;
Fig. 6 shows a schematic perspective view of a batter production device of Fig. 1;
Fig. 7 shows a schematic cross-sectional view of the container of Fig. 6;
Fig. 8 shows a schematic perspective view of one embodiment of a liquid supply system of the batter production device of Figs. 1-7;
Fig. 9 shows a schematic side view of the liquid supply system of Fig. 8;
Fig. 10 shows a schematic cross-sectional view of a valve arrangement for the liquid supply system of Fig. 8;
Fig. 11 shows an alternative schematic cross-sectional view of a valve arrangement;
Fig. 12 shows yet a further alternative schematic cross-sectional view of a valve arrangement;
Fig. 13 shows a flowchart of one embodiment of a method for mixing a liquid and a pulverulent material to form a batter for coating a food product;
Fig. 14a shows a cross-sectional view of a splatter screen;
Fig. 14b shows a perspective view of the splatter screen of fig. 14a;
Fig. 15a shows a perspective view of a funnel and part of the conveyor;
Fig. 15b shows a cross-sectional view of the funnel and conveyor part of fig. 15a;
Fig. 16a shows a first embodiment of a flap cover in a closed position;
Fig. 16b shows the flap cover of fig. 16a in the open position;
Fig. 17a shows a second embodiment of a flap cover in a closed position;
Fig. 17b shows the flap cover of fig. 17a in the open position;
Fig. 18a shows a third embodiment of a flap cover in a closed position;
Fig. 18b shows the flap cover of fig. 18a in the open position;
Fig. 19 shows a cross-sectional view of a dust hood.

In the Figures, like reference numerals designate like or functionally equivalent elements, unless otherwise indicated.

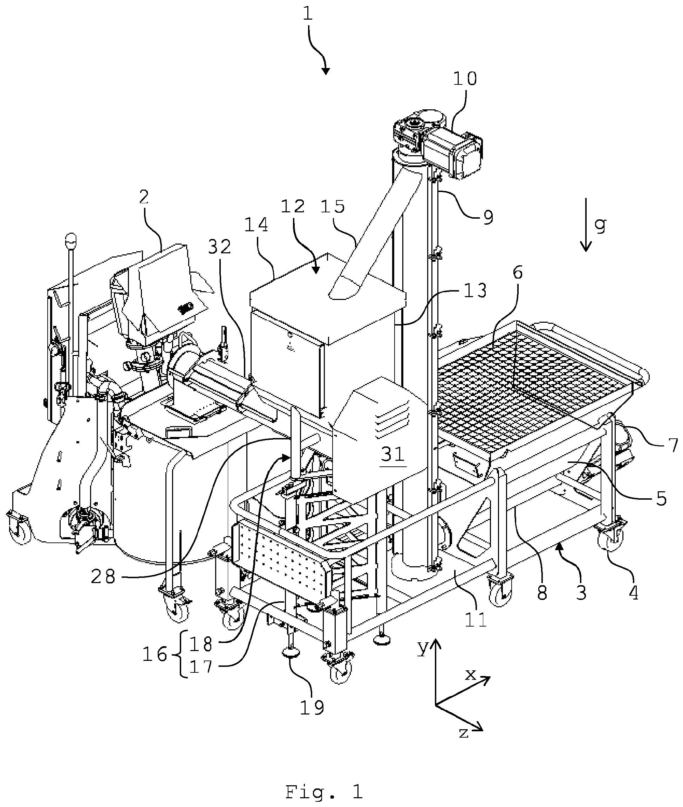

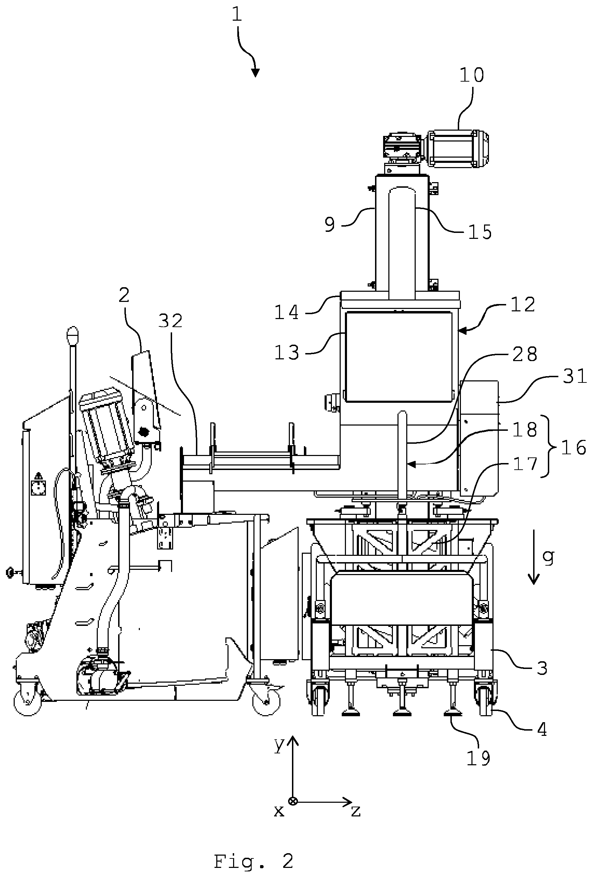

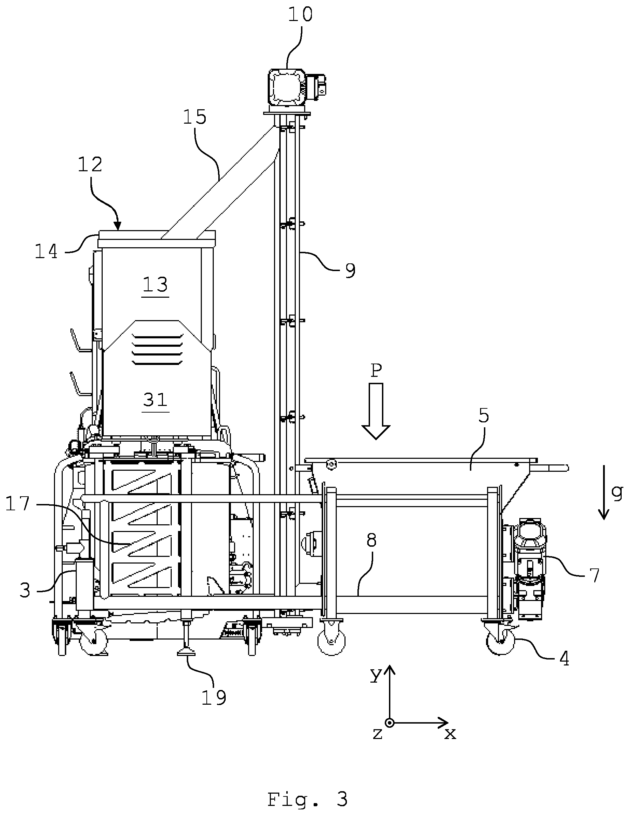

Fig. 1 shows a schematic perspective view of an embodiment of a batter production system 1 for producing a batter. The batter is used to coat a food product. Fig. 2 and 3 show side views of the batter production system 1. In the following, Figs. 1 to 3 will be referred to at the same time.

The term "food product" comprises a large range of different products. In particular it is intended to comprise at least products intended for human or animal consumption, such as protein-based products of any origin and structure, such as e.g., minced, sliced, formed and/or whole muscle or organ products from e.g., poultry, fish, vegetable and/or other meat protein sources.

The term "batter" in this context can mean any fluid and/or paste like substance intended to coat the food product wholly or partially, e.g., to enable adhering a subsequent dry coating to the surface of the food product and/or to develop as a baked crust in a heat treatment. Batters may for example comprise milk, water, oil or any other suitable carrier fluid, optionally combined with e.g., flour, herbs, fragrances and the like. Examples of batter include general purpose batter, tempura batter and marinades. The batter can be a mixture of a pulverulent material P (see Fig. 3), like breadcrumbs, with a liquid material, like water.

The batter production system 1 is described with reference to a coordinate system comprising a length direction or x-direction x, a height direction or y-direction y and a width direction or z-direction z. The directions x, y, z are arranged perpendicular to each other.

After coating the food product, it can be fried, frozen or processed further in any arbitrary way. The batter production system 1 is designed to mix the batter from raw substances, like example breadcrumbs and water.

The batter production system 1 comprises a batter production device 2 as well as a pulverulent supply device 3 which has a frame that rests on rollers 4. The frame 3 is made of tubes, in particular steel tubes or aluminum tubes. The number of rollers 4 is arbitrary. There can be provided six rollers 4. By means of the rollers 4, the pulverulent supply device 3 can be moved to its designated installation space.

The pulverulent supply device 3 comprising a lower container 5 that is supported by means of the frame. The lower container 5 can be named first container, first bunker, lower bunker, lower storage or first storage. The terms "lower container", "first container", "first bunker", "lower bunker", "lower storage" or "first storage" can be interchanged arbitrarily. The lower container 5 has a V-shaped geometry and opens towards a cover 6. The cover 6 can be a plastic or metal mesh.

The pulverulent material P (Fig. 3) can pass through the cover 6 into the lower container 5. The pulverulent material P can comprise particles. The pulverulent material P can comprise flour, breadcrumbs, or spices. The pulverulent material P can be provided in bags or the like. The bag is then opened and the pulverulent material P is fed to the lower container 5.

A drive element 7 drives a lower or first conveyor 8 that is arranged at a lowest part or point of the lower container 5. The first conveyor 8 is designed to pump the pulverulent material P. The first conveyor 8 can comprise a conveyor screw (not shown) that runs along the x-direction x along a whole length of the lower container 5. The first conveyor 8 can be named first horizontal conveyor.

A vertical or second conveyor 9 is designed to be supplied with the pulverulent material P from the lower container 5 by means of the first conveyor 8. The second conveyor 9 can be named vertical conveyor or second screw conveyor. The second conveyor 9 has a drive element 10 that drives a conveyor screw. The drive element 10 is an electric motor. The first conveyor 8 pumps the pulverulent material P sidewards against the x-direction x. The second conveyor 9 moves the pulverulent material P along the y-direction y. This conveyor may alternatively be mounted at an angle.

The second conveyor 9 takes the pulverulent material P from the first conveyor 8 and conveys it upwards along the y-direction y. The second conveyor 9 is fixed to a plate 11. The plate 11 is fixed to the frame. The second conveyor 9 pumps the pulverulent material P against a direction of gravity g. In this case the direction of gravity g and the y-direction y are arranged parallel toward each other.

A batch storage 12 of the pulverulent supply device 3 comprises an upper container 13 that is square-shaped or box-shaped. The upper container 13 can be named second container, second bunker, upper bunker, upper storage or second storage. The terms "upper container", "second container", "upper bunker", "second bunker", "upper storage" or "second storage" can be interchanged arbitrarily. The upper container 13 is filled with pulverulent material P from the lower container 5.

The upper container 13 can be closed by means of a lid or cover 14. The second conveyor 9 is fluidly connected to the batch storage 12 by means of a supply tube 15 that is guided through the cover 14. The supply tube 15 can be flexible so that the batch storage 12 is not tethered to the frame 3 when the upper container 13 or the frame 3 moves. The batch storage 12 is thus vibrationally uncoupled from the supply tube 15 and cover 14.

The batch storage 12 has its own frame 16 that is departed into two frame sections 17, 18. The frame 16 can be named second frame. A lower or first frame section 17 rests on the ground. For this reason, the first frame section 17 can have feet 19 that rest on the ground. The feet 19 are adjustable. There can be provided three feet 19. An upper or second frame section 18 is fixedly attached to the batch storage 12. For example, the second frame section 18 can be welded, soldered, glued, or bolted to the upper container 13. Both frame sections 17, 18 are frameworks with a triangular cross-section.

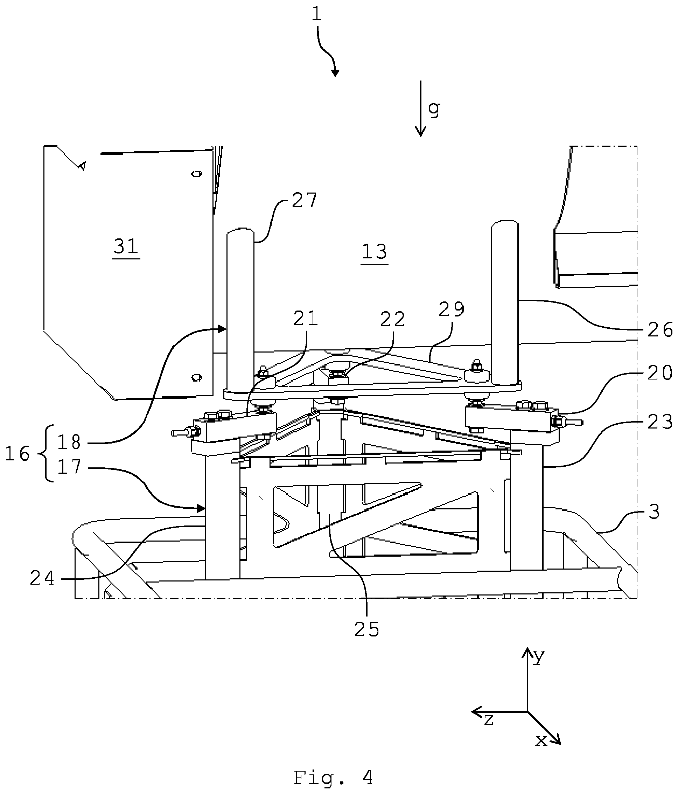

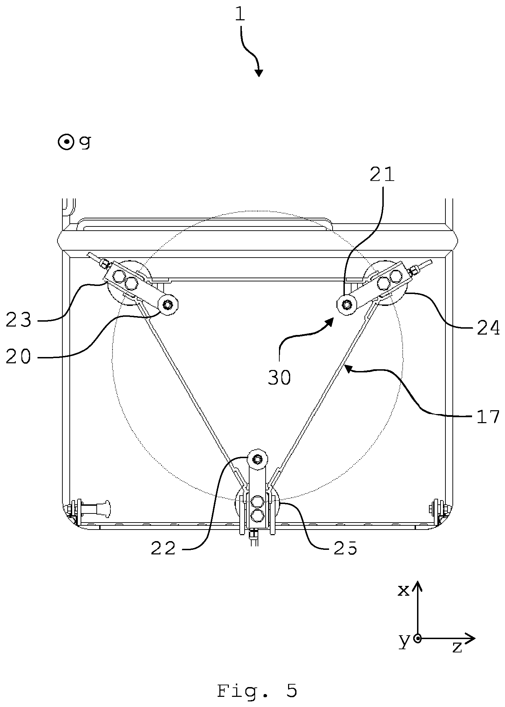

As can be seen from Figs. 4 and 5, the first frame section 17 and the second frame section 18 of the frame 16 are only coupled to each other by means of three load cells 20, 21, 22. There can be provided exactly three load cells 20, 21, 22. However, there can be provided more than three or less than three load cells 20, 21, 22. There can be provided a first load cell 20, a second load cell 21 and a third load cell 22.

The first frame section 17 has three main posts 23, 24, 25. There can be provided a first main post 23, a second main post 24 and a third main post 25. Each main post 23, 24, 25 supports one load cell 20, 21, 22. The load cells 20, 21, 22 are directly attached to ends of the main posts 23, 24, 25. In particular, the load cells 20, 21, 22 are glued or bolted to the main posts 23, 24, 25.

The second frame section 18 has three main posts 26, 27, 28 (see Fig. 2), too. There can be provided a first main post 26, a second main post 27 and a third main post 28. A triangular load cell plate 29 is fixed to ends of the main posts 26, 27, 28. The load cell plate 29 rests on the load cells 20, 21, 22. All load cells 20, 21, 22 together form a weigher 30 for detecting a weight of the batch of pulverulent.

The batch storage 12 comprises a pulverulent control system 31. The pulverulent control system 31 is connected to the load cells 20, 21, 22. The pulverulent control system 31 can comprise a computer. The pulverulent control system 31 is designed to operate the batch storage 12, the lower container 5 with the first conveyor 8 and/or conveyor 9. The load cells 20, 21, 22 carry the load of the batch storage 12 filled with the pulverulent material P. The load cells 20, 21, 22 can also carry the pulverulent control system 31.

A reduce of the pulverulent material P in the batch storage 12 can be monitored by means of the load cells 20, 21, 22 or the weigher 30. Thus, the weigher 30 can be used to detect the mass or the dosage of pulverulent material P leaving the batch storage 12 or being discharged into the batch storage 12 via the supply tube 15.

The pulverulent supply device 3 has a horizontal or third conveyor 32 that is connected to the upper container 13, in particular to the second frame section 18. The third conveyor 32 can be named third horizontal pulverulent material conveyor. The third conveyor 32 is designed to convey the pulverulent material P from the batch storage 12 to the batter production device 2. The third conveyor 32 comprises a drive element (not shown), in particular an electric motor. The third conveyor 32 can comprise a conveyor screw. The weight of the third conveyor 32 can rest at least partly on the load cells 20, 21, 22. However, this is not necessary.

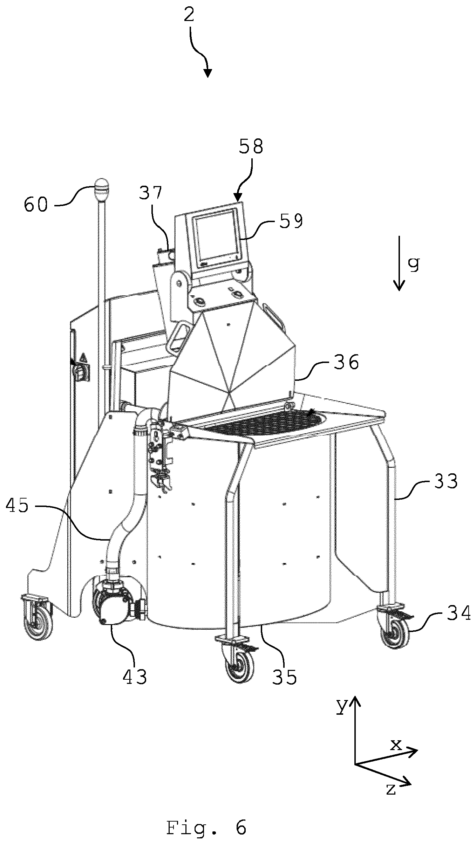

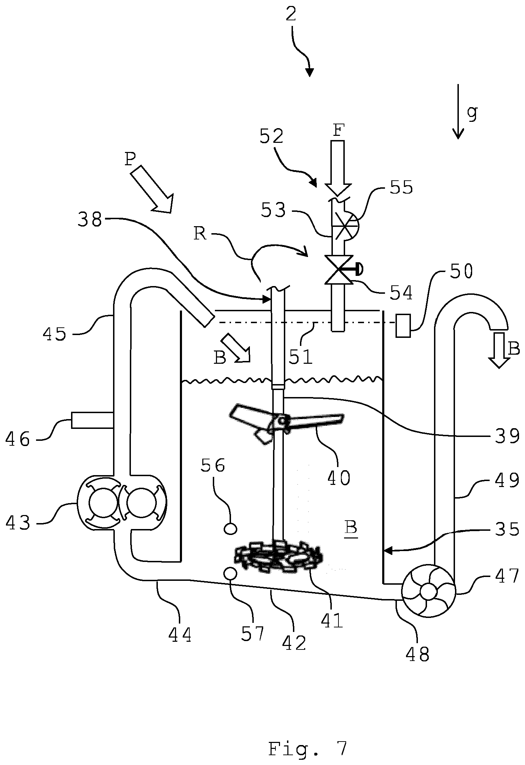

Now turning back to the batter production device 2 that is shown in a schematic perspective view in Fig. 6 and in a cross-sectional view in Fig. 7. The batter production device 2 has a frame 33 with a plurality of rollers 34. There can be provided four rollers 34. However, there can be provided more than four or less than four rollers 34.

A container 35 of the batter production device 2 takes in a liquid F and the pulverulent material P to mix batter B. The liquid F can be water, oil, beer, a mixture of the aforesaid or the like. The container 35 can be named third container, lower container or second lower container. The container 35 can be covered by means of a hinged cover 36. The cover 36 protects the container 35 from unwanted substances entering the batter B and a user when mixing the batter B.

The batter production device 2 comprises a drive element 37, in particular an electric motor, and an agitator 38 that is driven by the drive element 37 to mix the batter B. The agitator 38 rotates in a direction of rotation R. The direction of rotation R can be clockwise, counterclockwise, or both intermittingly. The agitator 38 comprises a stem or shaft 39 that is driven by means of the drive element 37, a plurality of first agitation elements 40, and a plurality of second agitation elements 41.

The first agitation elements 40 can have the form of blades. The second agitation elements 41 can have the form of knifes. The second agitation elements 41 are arranged close to a bottom 42 of the container 35. The first agitation elements 40 can be arranged around a middle of the container 35. When seen along the direction of gravity g, the first agitation elements 40 are arranged on top of the second agitation elements 41.

Furthermore, the batter production device 2 comprises a batter recirculation pump 43 which is connected to an outlet 44 of the container 35. The batter recirculation pump 43 pumps the batter B from the bottom 42 of the container 35 via a recirculation hose 45 back into the container 35. The recirculation hose 45 has a sensor 46. The sensor 46 is configured to measure a pressure drop of the batter B when pumped through hose 45. This measurement may be used as an indication for the viscosity of the batter B.

Optionally, the batter production device 2 has a drain pump 47 that is connected to an outlet 48 of the container 35. The batter drain pump 47 pumps batter B out of the container 35 via a drain hose 49. For example, the batter B can be pumped to a battering station (not shown). In the battering station, the food product is covered with the batter B.

An optional sensor 50 is provided for detecting a filling state of the container 35. For example, the sensor 50 provides a signal when the container 35 is filled with the batter B up to a level 51. The sensor 50 can be an optic sensor or any other suitable sensor. The level 51 can be chosen as wanted to produce the desired amount of batter B. In other words, the level 51 is flexible and can thus be determined by the user or a mixing program of the batter production device 2. "Determined" in this context thus means that the level 51 can be manually chosen or determined by the batter production device 2 itself.

The optical sensor 50 can be used for calibration, in combination with a pulse counter. An amount of liquid is supplied to the container 35 and the pulses of the flow meter generated by this supply flow are counted. In the container 35, sensor 50 accurately determines the amount of liquid that is supplied, advantageously the predetermined amount of fresh liquid required for the batch of batter that is to be produced. The amount of pulses corresponding to this accurately determined amount of water can be used as input for the control system. The control system in connection with the flow meter is now inputted with a number of pulses, which has proven to be more accurate than the volumetric output of the flow meter.

A liquid supply system 52, in particular a water supply system, is provided that takes a certain amount of liquid F, in particular fresh water, into the container 35. The liquid supply system 52 has a supply tube 53.

The liquid supply system 52 also comprises a flow meter 55 for metering the liquid F passing the liquid supply tube 53. The flow meter 55 can be a water meter. The liquid supply system 52 has two outlets that will be explained in detail later and that enable an exact dosing of the liquid F. However, in Fig. 7, only one outlet that discharges into the container 35 can be seen. The liquid supply system 52 will be explained in more detail later.

Two more sensors 56, 57 are provided at or in the container 35. These sensors 56, 57 can comprise temperature sensors, pH sensors or the like.

The batter production device 2 further comprises a control system 58. The shown control system 58 is designed to communicate with the sensors 46, 50, 56, 57, the batter pumps 43, 47, the flow meter 55, the valves 62, 63, the drive element 37 and/or a plurality of other components and sensors. The control system 58 is designed to activate the batter pumps 43, 47 and/or the valves if needed. The control system 58 also communicates with the pulverulent control system 31 and/or interacts with the load cells 20, 21, 22 or the weigher 30.

The control system 58 can comprise a computer or is a computer. The control system 58 has a data storage that comprises a plurality of mixing receipt or procedures, so that the batter production device 2 can be operated highly autonomous. The control system 58 has a touch screen 59. An indicator light 60 indicates a malfunction, lack of liquid F or pulverulent material P or the like. The indicator light 60 is connected to the control system 58.

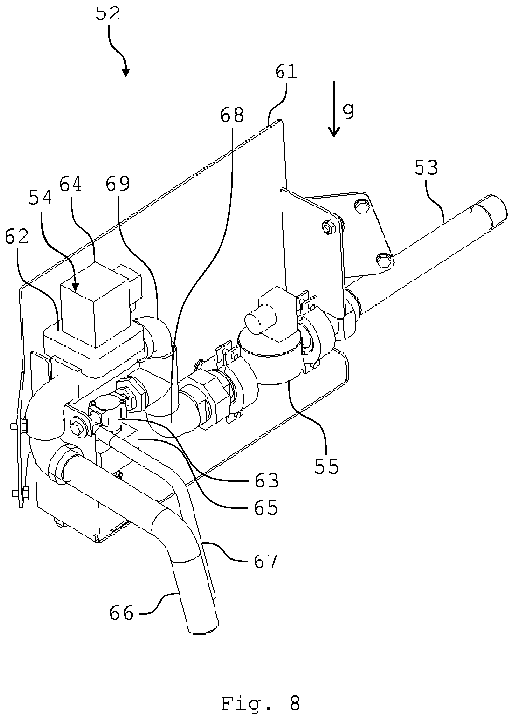

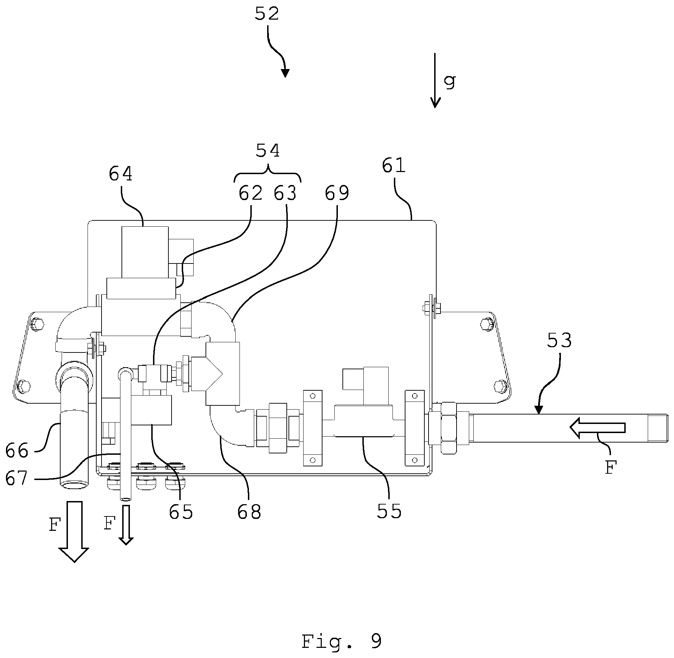

Fig. 8 shows a schematic perspective view of the liquid supply system 52 as mentioned before. Fig. 9 shows a schematic side view of the liquid supply system 52. In the following, Figs. 8 and 9 will referred to at the same time.

The liquid supply system 52 is designed to convey a liquid F, in particular fresh water. However, the liquid F can be any other suitable fluid or pasty product. The liquid supply system 52 comprises a base plate 61. The base plate 61 can be attached to the frame 33. The base plate 61 is a bent piece of metal. However, the base plate 61 can also be made of plastic.

The base plate 61 carries the supply tube 53, the flow meter 55 and the valve arrangement with valves. "Valve arrangement" in this context means that the valve arrangement 54 comprises a plurality of sub-systems or sub-valves. In particular, the valve arrangement 54 comprises a main valve 62 and an auxiliary valve 63.

The valves 62, 63 are attached to the base plate 61. The main valve 62 has a drive element 64. The auxiliary valve 63 has a drive element 65. The drive elements 64, 65 can be magnets or electric motors. The drive elements 64, 65 are controlled by means of the control system 58 to open and close the valves 62, 63 remotely. The valves 62, 63 can be solenoid valves.

The valves 62, 63 differ from each other. "Differ" in this context at least means that the main valve 62 and the auxiliary valve 63 do not form one common component but form two different components. However, this does not exclude that the valves 62, 63 can have a common valve housing. Differences between the valves 62, 63 can be their discharge cross-sections and/or their volumetric flow rate as will be explained later.

In particular, the main valve 62 allows a higher throughput of liquid F over the same time slot compared to the auxiliary valve 63. The auxiliary valve 63 allows a lower throughput of liquid F but is at the same time faster, more precise and/or easier controllable when dosing small amounts of liquid F into the container 35.

A flow direction of the liquid F is oriented from the right to the left in Fig. 9. The supply tube 53 splits into the main tube 66 and the auxiliary tube 67. The main valve 62 is connected to a main tube 66. The main tube 66 has a first outlet. The auxiliary valve 63 is connected to an auxiliary tube 67. The auxiliary tube 67 has a second outlet.

In the shown embodiment, the main tube with a first outlet 66 and auxiliary tube with a second outlet 67 discharge directly into the container. Via the outlets 66, 67, the liquid F discharges into the container 35 when a respective one of the valves 62, 63 is opened. When both valves 62, 63 are closed, no liquid F leaves the outlets 66, 67. The tubes 66, 67 can be bent. The tubes 66, 67 can also be bores provided in a housing of the liquid supply system 52.

Downstream the flow meter 55 and upstream the main valve 62, the auxiliary tube 67 branches off the supply tube 53.

When the auxiliary valve 63 is open and the main valve 62 is closed, a flow of liquid F passes through the auxiliary valve 63 and the auxiliary tube 67 into the container 35. When the auxiliary valve 63 is closed, the liquid F flows through the opened main valve 62, and is discharged via the main tube 66 into the container 35.

It is possible to open both valves 62, 63 completely or partly so that the liquid F leaves both outlets 66, 67. The valves 62, 63 can be controlled independent of each other. Each valve 62, 63 can be opened and closed anytime without interaction with the other valve 62, 63.

Downstream the flow meter 55, the supply tube 53 has a first bend 68 that guides the flow from a horizontal direction into a direction parallel to the direction of gravity g. Downstream the auxiliary valve 63, the tube 53 has a second bend 69 that guides the flow back to a horizontal direction. Both bends 68, 69 bend the tube 53 for 90°. Thus, the tube 53 has two bends 68, 69 each changing a direction of the flow for 90°.

It is illustrated that the flow meter 55 is constantly covered with liquid F because the flow meter 55 is positioned below the valves 62, 63 when seen along the direction of gravity g. No gas bubbles can be trapped and/or collected in the flow meter 55. The accuracy of the flow meter 55 can thus be increased.

The main tube 66 has a bigger volumetric flow rate than the auxiliary tube 67 has. In the present case, the term "volumetric flow rate" means the volume of a fluid, namely the liquid F, which passes through the main tube 66 and/or the auxiliary tube 67 per time unit. A bigger or higher volumetric flow rate of the main tube 66 means that in the same time unit more liquid F passes the main tube 66 than the auxiliary tube 67. The volumetric flow rate can be adjusted by amending an inner diameter or cross-section of the outlet 66, 67.

It is thus possible to fill the container 35 very quickly with the fresh liquid F by using both outlets 66, 67 or at least the main tube 66. When the container 35 is almost full, the main tube 66 will be closed and a fine dosing of the liquid F can be done only by means of the auxiliary tube 67. The filling of the container 35 with the fresh liquid F can be done automatically. Thus, the valve arrangement 54 can be controlled by the control system 58 to fill the container 35 autonomously with high accuracy and less time. However, the valves 62, 63 can also be operated manually.

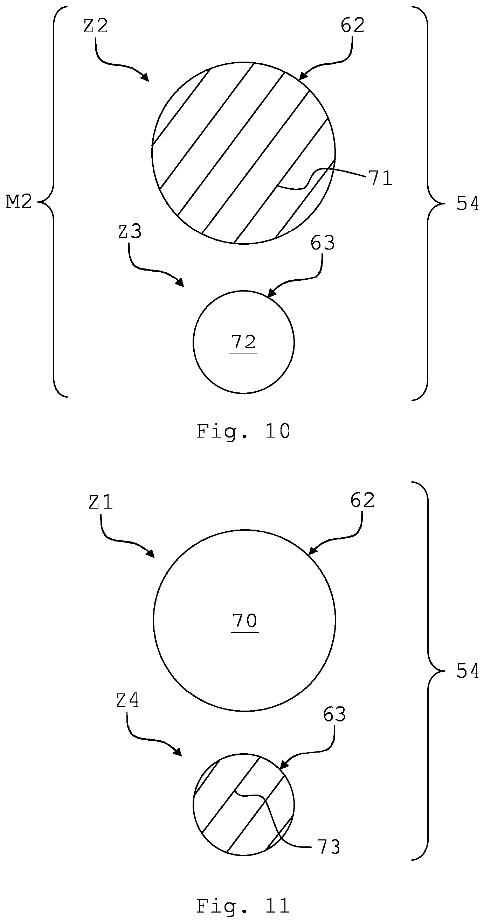

Figs. 10 to 12 show schematic cross sections of an embodiment of the valve arrangement 54 comprising the valves 62, 63. The main valve 62 has a first discharge cross-section 70. "Discharge cross-section" in this context means a cross-sectional area that can be flowed through by the liquid F when the main valve 62 is opened. The first discharge cross-section 70 can be engineered as a circular bore in a valve housing or the like. The bigger the first discharge cross-section 70 is, the bigger the volumetric flow rate is.

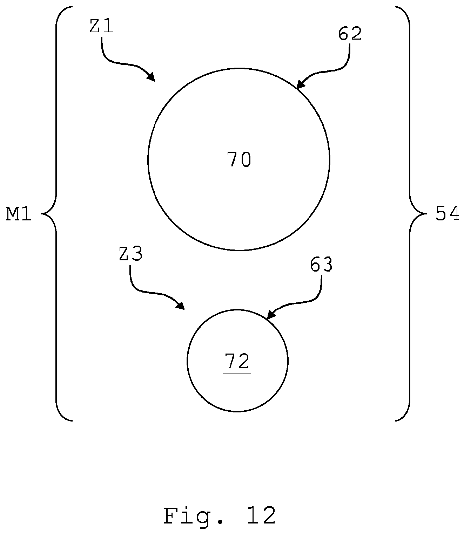

The first discharge cross-section 70 can be completely closed by means of a valve body 71. In this way, the main valve 62 can be brought from an open state Z1 (Figs. 11 and 12) into a closed state Z2 (Fig. 10) and vice versa. In the open state Z1, the valve body 71 does not block the first discharge cross-section 70 at all. In the closed state Z2, the valve body 71 does block the first discharge cross-section 70 completely.

However, the first discharge cross-section 70 can be adjusted in a stepless way between the two states Z1, Z2 in which the valve body 71 blocks the first discharge cross-section 70 at least partly. This means than an arbitrary number of intermediate states is provided between the open state Z1 and the closed state Z2 of the main valve 62.

The auxiliary valve 63 has a second discharge cross-section 72. The second discharge cross-section 72 can be engineered as a circular bore in the valve housing. The discharge cross-sections 70, 72 have different sizes or different diameters. The first discharge cross-section 70 is bigger than the second discharge cross-section 72. For example, the first discharge cross-section 70 of the main valve 62 is two times bigger than the second discharge cross-section 72 of the auxiliary valve 63.

The second discharge cross-section 72 can be completely closed by means of a valve body 73. In this way, the auxiliary valve 63 can be brought from an open State Z3 (Figs. 10 and 12) into a closed state Z4 (Fig. 11) and vice versa. In the open state Z3, the valve body 73 does not block the second discharge cross-section 72 at all. In the closed state Z4, the valve body 73 does block the second discharge cross-section 72 completely.

However, the second discharge cross-section 72 can be adjusted in a stepless way between the two states Z3, Z4 in which the valve body 73 blocks the second discharge cross-section 72 at least partly. This means than an arbitrary number of intermediate states is provided between the open state Z3 and the closed state Z4. Both valves 62, 63 can be actuated independent of each other.

The valve arrangement 54 can be switched from a filling mode M1 (Fig. 12) into a dosing mode M2 (Fig. 10) and vice versa. The switching can be done by means of the control system 58. As can be seen from Fig. 12, in the filling mode M1, both valves 62, 63 are in the open state Z1, Z3. This means that both outlets 66, 67 discharge fresh liquid F into the container 35 as long as the valve arrangement 54 is in the filling mode M1. However, in the filling mode M1 at least the main valve 62 is in its open state Z1. The auxiliary valve 63 can be in the closed state Z4. Thus, Fig. 11 can show the filling mode M1, too.

On contrast, in the dosing mode M2 (Fig. 10), only the auxiliary valve 63 is in the open state Z3. The main valve 62 is in the closed state Z2. This means that only the auxiliary tube 67 discharges fresh liquid F into the container 35 as long as the valve arrangement 54 is in the dosing mode M2.

The functionality of the batter production device 2 will be explained in the following with regard to Figs. 6 to 12. The control system 58 is activated by requesting a recipe or a method for producing a batch of batter B. The control system 58 thus calculates the amount of fresh liquid F and the dosage of pulverulent material P that is needed to mix the batter B.

Then the container 35 is automatically filled with the fresh liquid F. To do so, the control system 58 controls the valve arrangement 54 of the liquid supply system 52. During the beginning of the filling process, both valves 62, 63 are open (see Fig. 12) so that the fresh liquid F discharges into the container 35 by means of both outlets 66, 67.

In other words, the valve arrangement 54 is in the filling mode M1. This enables a quick filling of the container 35 with the fresh liquid F. For fine dosing the fresh liquid F, the main valve 62 is then closed and the liquid F discharges into the container 35 solely via the auxiliary tube 67 (see Fig. 10). Thus, the valve arrangement 54 is in the dosing mode M2.

The main valve 62 and the auxiliary valve 63 differ from each other not only in their discharge cross-sections 70, 72 but also in the accuracy and control speed. The auxiliary valve 63 can be switched faster and more precise than the main valve 62. However, since the second discharge cross-section 72 of the auxiliary valve 63 is smaller than the first discharge cross-section 70 of the main valve 62, an exact dosing of the fresh liquid F is possible via the second discharge cross-section 72 and the auxiliary tube 67.

As soon as the container 35 is filled with the predetermined amount of liquid F, the pulverulent material P is conveyed to the container 35 via the third conveyor 32 from the batch storage 12. The batch storage 12 encompasses enough pulverulent material p for one batch of batter B. The amount or mass of the pulverulent material P that is conveyed to the batter production device 2 is monitored by means of the weigher 30 that also interacts with the control system 58.

The pulverulent material P is then mixed with the liquid F in the container 35 to form the batter B. The viscosity of the batter B can be tested by drawing samples of the batter B. Additional liquid F or pulverulent material P can be added to the mixed batter B to improve the viscosity thereof. This can be done automatically. The mixed batter B is then pumped to a battering station (not shown) to batter the food product.

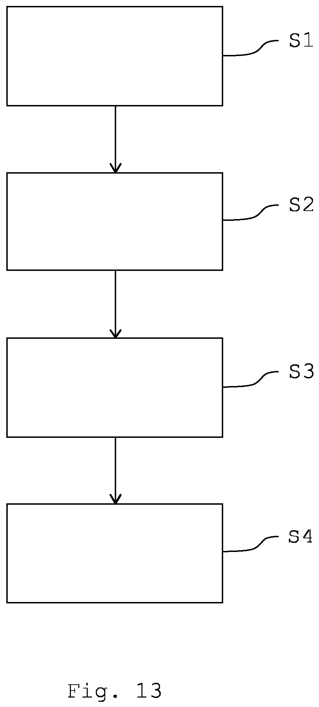

Fig. 13 shows a flowchart of one embodiment of a method for mixing the liquid F and the pulverulent material P to form the batter B for coating a food product. The method is done by means of a batter production device 2 as explained before. The batter production device 2 comprises the container 35, the agitator 38 that is installed in or on the container 35, and the liquid supply system 52 for supplying the liquid F to the container 35.

The liquid supply system 52 comprises the valve arrangement 54 for controlling the flow of liquid F through the main tube 66 that discharges into the container 35, and through the auxiliary tube 67 that also discharges into the container 35, wherein the main tube 66 has a first volumetric flow rate, wherein the auxiliary tube 67 has a second volumetric flow rate, and wherein the first volumetric flow rate is larger than the second volumetric flow rate.

The pulverulent material P is supplied to the container 35 in a step S1. Preferably, the pulverulent material P is conveyed from the batch storage 12 to the batter production device 2 via the third conveyor 32. The supply of the pulverulent material P can be done automatically. The agitator may be activated in advance, during or after supplying the pulverulent material P.

In a step S2, the liquid F is supplied to the container 35 via the main tube 66 and possibly also via the auxiliary tube 67 to pre-fill the container 35. In other words, in step S2 both valves 62, 63 may be open or at least valve 62 is open. "Pre-fill" or "initial fill" in this context means a quick and coarse input of liquid F that is stopped before the predetermined amount of liquid is reached. Step S2 is performed with the valve arrangement 54 being in its filling mode M1.

In a step S3, the liquid F is supplied to the container 35 only via the auxiliary tube 67 to end-fill the container 35 until the predetermined amount of liquid is reached. In other words, the main tube 66 and thus the main valve 62 is closed. "End-fill" in this context is to be understand as a rest of liquid F that is needed to fill the container 35 to its maximum, namely until the predetermined amount of liquid is reached. The needed "maximum" is depending on the type of batter B to be produced and/or the used recipe for the batter B. Step S3 is performed with the valve arrangement 54 being in its dosing mode M2. The amount of liquid in relation to the dosage of pulverulent material P being conveyed to the container 35 depends on the type of batter B and the desired viscosity thereof.

In a step S4, the liquid F with the pulverulent material P is mixed by means of the agitator 38 to form the batter B. In step S4, the viscosity of the batter B can be checked if desired. For example, the batter is recirculated during the mixing.

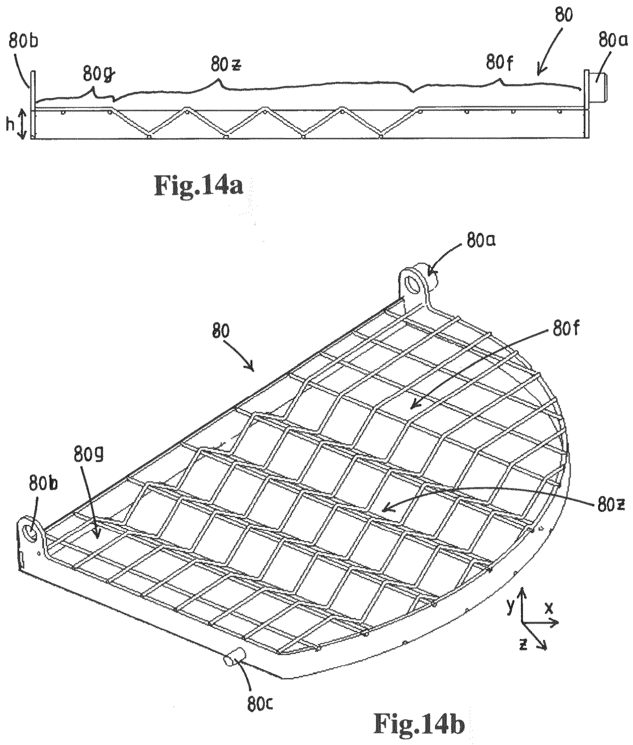

In figs. 14a and 14b a splatter screen 80 is shown, also referred to as anti-splash screen, to prevent splashes of liquid, pulverulent material or batter spattering into the conveyor or outside the container. The prevention of unintended loss of liquid, pulverulent material and batter attributes to the accuracy of the composition of batter, and thus to the reproducibility of batches of batter.

The shown splatter screen 80 comprises mounting means 80a, 80b and 80c to mount the splatter screen 80 to a top end of the container.

The splatter screen 80 has an outer contour in the x-z plane shaped to fit with a fill opening at an upper end of the container. It is also conceivable that the splatter screen is larger or slightly smaller than the fill opening, as long as the splatter screen serves the aim of preventing of spattering outside the container.

A splatter screen can be embodied as a two-dimensional wire mesh or grate. The shown splatter screen 80 is embodied as a three-dimensional wire grate having a height h in direction y. The splatter screen 80 comprises two portions 80f, 80g not having a profile in the height direction h. The splatter screen 80 comprises a central portion 80z having a zigzag profile in the height direction h. Embodiments are conceivable wherein the entire splatter screen has a zigzag profile in the height direction. An advantage of a zigzag profile is that it attributes to spatters dropping back into the container instead of sticking to the splatter screen.

The splatter screen 80 is advantageously replaceable by a second splatter screen 80, such that for the production of a second or further batch of batter a clean splatter screen can be provided.

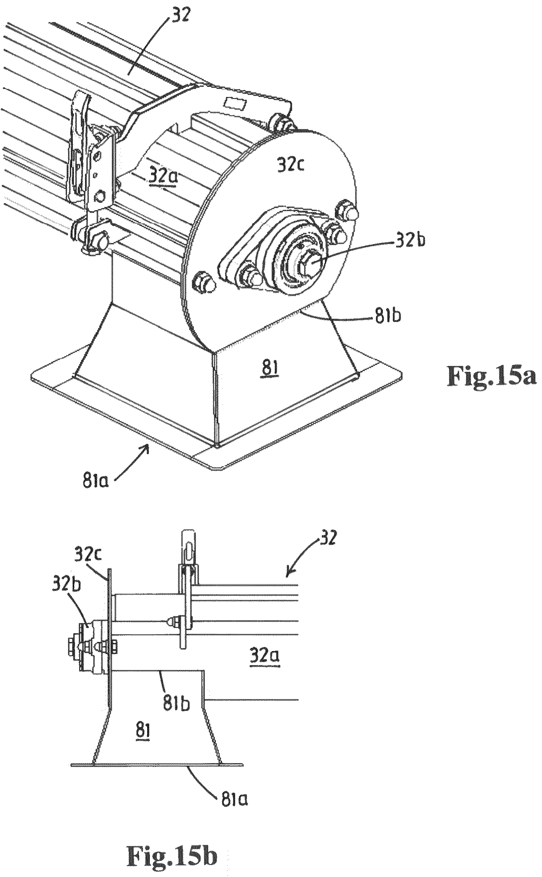

In figs. 15a and 15b a funnel 81 and part of the conveyor 32 are shown. The funnel 81 has a lower funnel opening 81a, fitting with a fill opening of the container (not shown), allowing the funnel 81 to be provided between the fill opening and the outlet opening.

In embodiments, it is conceivable that the lower funnel opening 81a is mounted to the container.

In embodiments, the lower funnel opening is provided with a splatter screen, e.g. a splatter screen as shown in figs. 14a and 14b.

The funnel 81 has an upper funnel opening fitting with the outlet opening of the conveyor 32. As the outlet opening of the conveyor 32 is generally smaller than the fill opening of the container, the funnel 81 is generally shaped as a reverse funnel having a smaller upper opening 81b than lower opening 81a.

Advantageously, the conveyor has an outlet opening parallel to the fill opening of the conveyor, resulting in a funnel shape of the funnel 81. The shown conveyor 32 is a horizontal screw conveyor having an auger provided in a tubular housing 32a having a head end 32c. Two auger bearings are provided at opposed ends of the auger. Here, auger bearing 32b Is provided at a closed head end 32c of the tubular conveyor 32. The outlet opening of the conveyor 32 is provided at a bottom end portion of the tubular housing, here at the top end of the funnel 81.

In alternative, not shown embodiments it is conceivable that the outlet opening of the conveyor extends at an angle with the fill opening, e.g. a vertically oriented outlet opening of the conveyor and a horizontal fill opening of the container. The funnel 81 may in such cases comprise a bent portion.

The funnel is provided to prevent splashes of liquid, pulverulent material or batter spattering into the conveyor or outside the container. The prevention of unintended loss of liquid, pulverulent material and batter attributes to the accuracy of the composition of batter, and thus to the reproducibility of batches of batter.

The funnel advantageously has a smooth inside, e.g. polished, e.g. by electropolishing, or coated with a non-sticking coating.

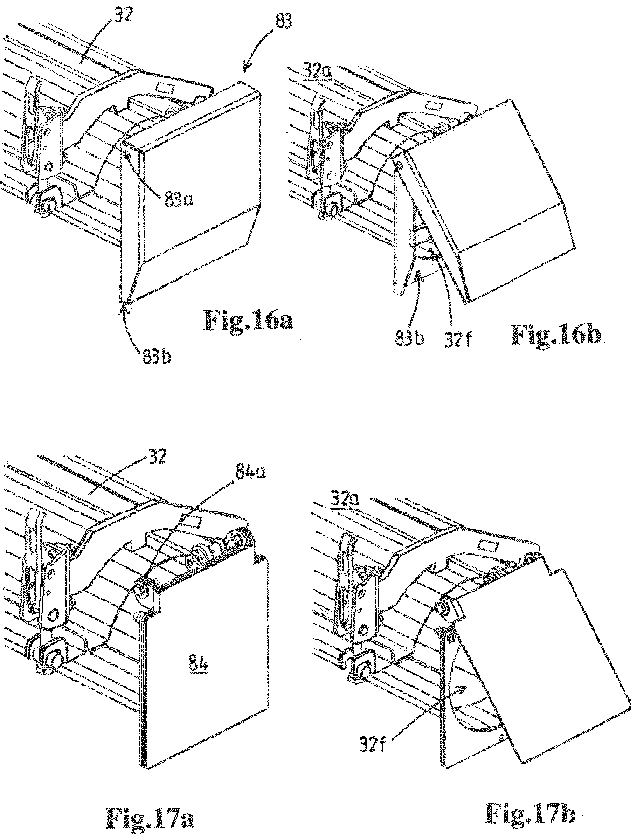

Figs. 16a, 16b, 17a, 17b, 18a and18b shows three distinct embodiments of a flap cover 83, 84 and 85 respectively.

Also part of a pulverulent supply device is shown, in particular a horizontal screw conveyor 32 for conveying the batch of pulverulent material, the conveyor having an outlet opening 32f adapted to be arranged above the fill opening of the container for dispatching the pulverulent material into the container. The conveyor has an auger, not shown, provided in a tubular housing 32a. Contrary to the embodiment of fig. 15a, the tubular housing 32a has an open upstream head end 32f, visible in figs. 16b, 17b and 18b. This open head end 32f forms the outlet opening of the conveyor for dispatching the pulverulent material. A rear auger bearing, not shown, is provided at the storage end of the conveyor and a front auger bearing is provided at an opposed head end 32f of the tubular housing.

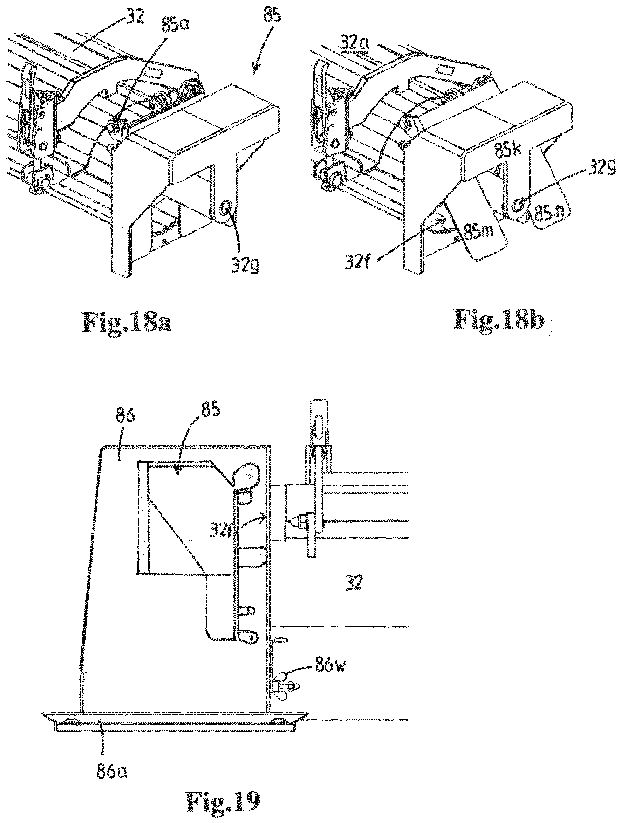

In the embodiment of figs. 18a and 18b, flap cover 85 is provided downstream of the front auger bearing 32g, i.e. surrounding the front auger bearing 32g. In the embodiments of figs. 16 and 17 the flap covers 83, 84 are provided upstream of the front auger bearing, which is thus no longer visible.

Flap covers 83, 84, 85 are provided at the outlet opening 32f of the conveyor 32. The flap covers 83, 84, 85 are hingedly mounted about a horizontal hinge axis 83a, 83b, 83c. The flap covers are hingeable between an open position shown in figs. 16b, 17b en 18b wherein the flap cover allows the passage of pulverulent material, and a closed vertical position shown in figs. 16a, 16b and 16c wherein the flap cover 83, 84, 85 respectively cover the outlet opening 32f. Movement of the flap covers to the open position is actuated by the pulverulent material supplied by the auger, and movement to the closed position is actuated by gravity and the lack of supply of pulverulent material. Alternatively, an actuator for opening and/ or closing the flap covers is provided.

The first embodiment of a flap cover 83 as shown in figs. 16a, 16b, in the closed vertical position of the flap cover as shown in fig. 16a, between the flap cover 83 and the outlet opening 32f a slit 83b is provided, allowing the passage of residual amounts of pulverulent material.

The second embodiment of a flap cover 84 as shown in figs. 17a, 17b entirely closes the head end opening 32f of the conveyor.

The third embodiment of flap cover 85 shown in figs. 18a, 18b is provided downstream of the front auger bearing 32g. The flap bearing 85 thus comprises a portion 85k extending above the front auger bearing 32g, and two portions 85k, 85n adjacent the front auger bearing. The portions 85k, 85m and 85n together surround the front auger bearing 32g.

In fig. 19 a dust hood 86 is shown, which is releasably mounted via wing nut 86w. The dust hood 86 is provided at the outlet opening 32f of the conveyor 32, here a horizontal screw conveyor, to entirely surround the outlet opening of the conveyor. The dust hood 86 also surrounds the fill opening 86a of the container and thus prevent splashes of liquid, pulverulent material or batter spattering into the conveyor or outside the container. The prevention of unintended loss of liquid, pulverulent material and batter attributes to the accuracy of the composition of batter, and thus to the reproducibility of batches of batter. In addition, the hood prevents dust from the pulverulent material to spread around, attributing to the production circumstances and also the accuracy of the amount of pulverulent material.

Advantageously, the pulverulent supply device further comprises a flap cover as described above, here flap cover 85 provided at the outlet opening 32f of the conveyor 32. In the shown embodiment, the flap cover 85 is mounted to the dust hood 86 and removable together with the dust hood 86.

## Claims

1. A **batter** production device (2) for producing a batter by mixing a fresh liquid (F) and a pulverulent material (P) to form a batter (B) for coating a food product, comprising:
• a container (35) for receiving a predetermined amount of fresh liquid (F) and a dosage of pulverulent material (P),
• an agitator (38) that is installed in or on the container and immersed into the container (35) for mixing the fresh liquid (F) and the pulverulent material (P) to form the batter (B),
• a liquid supply system (52) for supplying the predetermined amount of fresh liquid (F) to the container (35), comprising:
∘ an upstream supply tube (53) for the supply of fresh liquid,
∘ a downstream main tube with a first outlet (66) and associated main valve (62) for receiving fresh liquid from the supply tube (53) and discharging into the container (35),
∘ a flow meter (55) for determining the amount of fresh liquid that flows by,
• a control system (58) in connection with the main valve and the flow meter and to which the predetermined amount of fresh liquid (F) is inputted, which control system is operable to fill the container with the predetermined amount of fresh liquid,
**characterized in that** the liquid supply system further comprises a downstream auxiliary tube with a second outlet (67) and associated auxiliary valve (63) also receiving fresh liquid from the supply tube (53) and discharging into the container (35), wherein the auxiliary tube has a smaller cross-section than the main tube and/or wherein the auxiliary valve has a smaller discharge cross-section than the main valve, so that - in use - fresh liquid is discharged from the first outlet at a first volumetric flow rate and from the second outlet at a second volumetric flow rate which is smaller than the first volumetric flow rate, the auxiliary valve also being in connection with the control system, and wherein the main valve and auxiliary valve are operable independent from each other,
and wherein the control system is configured to cause a pre-fill of the container at least via the main tube (66) and to cause an end-fill of the container (35) only via the auxiliary tube (67).

2. A batter production device according to claim 1, wherein the supply tube (53) splits into the main tube with a first outlet (66) and the auxiliary tube with a second outlet (67).

3. A batter production device according to any of the preceding claims, wherein the main tube with a first outlet (66) and auxiliary tube with a second outlet (67) discharge directly into the container.

4. A batter production device according to any of the preceding claims, wherein the liquid supply system further comprises a main liquid pump in the main tube and/ or the supply tube and an auxiliary liquid pump in the auxiliary tube.

5. A batter production device according to any of the preceding claims, wherein the liquid supply system further comprises a main flow meter in the main tube and/ or the supply tube and an auxiliary flow meter in the auxiliary tube.

6. A batter production device according to any of the preceding claims, wherein the control system (58) is in connection with a pulverulent supply device and to which the dosage of pulverulent material is inputted, which control system is operable to fill the container with the dosage of pulverulent material.

7. A batter production device according to any of the preceding claims, a pulverulent supply device comprising a storage (12) for storing a batch of pulverulent material (P), a conveyor (32) for conveying the batch of pulverulent material (P) to the container (35) and a weigher (30) for detecting a weight of the batch of pulverulent material (P), wherein the weigher is advantageously connected to the control system and wherein the control system is operable to fill the storage with the dosage of pulverulent material.

8. Method for producing a batter (B) for coating a food product by means of a batter production device (2) according to the preceding claims, the method comprising the following steps:
a1) supplying (S1) fresh liquid (F) to the container (35) via the main tube (66) to pre-fill the container (35), followed by
a2) supplying (S2) fresh liquid (F) to the container (35) only via the auxiliary tube (67) to end-fill the container (35) until the predetermined amount of fresh liquid in the container (35) is reached,
b) supplying (S3) the dosage of pulverulent material (P) to the container (35), and
c) mixing (S4) the fresh liquid (F) with the pulverulent material (P) by means of the agitator (38) to form the batter (B).

9. Method according to claim 8, wherein prior to step b) the dosage of pulverulent material is determined, followed by on the basis hereof determining the predetermined amount of fresh liquid.

## Patentansprüche

1. Teigherstellungsvorrichtung (2) zur Herstellung eines Teigs durch Mischen einer frischen Flüssigkeit (F) mit einem pulverförmigen Material (P) zur Bildung eines Teigs (B) zum Beschichten eines Lebensmittels, umfassend:
• einen Behälter (35) zum Aufnehmen einer vorgegebenen Menge frischer Flüssigkeit (F) und einer Dosierung pulverförmigen Materials (P),
• ein Rührwerk (38), das im oder am Behälter installiert und in den Behälter (35) eingetaucht ist, um die frische Flüssigkeit (F) und das pulverförmige Material (P) zum Bilden des Teigs (B) zu vermischen,
• ein Flüssigkeitszufuhrsystem (52) zur Zufuhr der vorgegebenen Menge frischer Flüssigkeit (F) in den Behälter (35), umfassend:
∘ ein stromaufwärtiges Zulaufrohr (53) für die Zufuhr frischer Flüssigkeit,
∘ ein stromabwärtiges Hauptrohr mit einem ersten Auslass (66) und zugehörigem Hauptventil (62) zum Aufnehmen frischer Flüssigkeit aus dem Zulaufrohr (53) und zur Abgabe in den Behälter (35),
∘ einen Durchflussmesser (55) zur Bestimmung der durchströmenden Menge frischer Flüssigkeit,
• ein Steuersystem (58), das mit dem Hauptventil und dem Durchflussmesser verbunden ist und in das die vorgegebene Menge frischer Flüssigkeit (F) eingegeben wird, wobei das Steuersystem dazu ausgelegt ist, den Behälter mit der vorgegebenen Menge frischer Flüssigkeit zu befüllen,
**dadurch gekennzeichnet, dass** das Flüssigkeitszufuhrsystem ferner ein stromabwärtiges Hilfsrohr mit einem zweiten Auslass (67) und zugehörigem Hilfsventil (63) umfasst, das ebenfalls frische Flüssigkeit aus dem Zulaufrohr (53) aufnimmt und in den Behälter (35) abgibt, wobei das Hilfsrohr einen kleineren Querschnitt als das Hauptrohr aufweist und/oder das Hilfsventil einen kleineren Auslassquerschnitt als das Hauptventil aufweist, sodass - im Betrieb - frische Flüssigkeit aus dem ersten Auslass mit einer ersten Volumenstromrate und aus dem zweiten Auslass mit einer zweiten Volumenstromrate abgegeben wird, wobei die zweite Volumenstromrate kleiner als die erste Volumenstromrate ist, wobei das Hilfsventil ebenfalls mit dem Steuersystem verbunden ist und wobei das Hauptventil und das Hilfsventil unabhängig voneinander betätigbar sind,
und wobei das Steuersystem dazu ausgelegt ist, ein Vorbefüllen des Behälters zumindest über das Hauptrohr (66) und ein Endbefüllen des Behälters (35) ausschließlich über das Hilfsrohr (67) zu veranlassen.

2. Teigherstellungsvorrichtung nach Anspruch 1, wobei das Zulaufrohr (53) sich in das Hauptrohr mit einem ersten Auslass (66) und das Hilfsrohr mit einem zweiten Auslass (67) verzweigt.

3. Teigherstellungsvorrichtung nach einem der vorhergehenden Ansprüche, wobei das Hauptrohr mit einem ersten Auslass (66) und das Hilfsrohr mit einem zweiten Auslass (67) direkt in den Behälter münden.

4. Teigherstellungsvorrichtung nach einem der vorhergehenden Ansprüche, wobei das Flüssigkeitszufuhrsystem ferner eine Hauptflüssigkeitspumpe im Hauptrohr und/oder im Zulaufrohr sowie eine Hilfsflüssigkeitspumpe im Hilfsrohr umfasst.

5. Teigherstellungsvorrichtung nach einem der vorhergehenden Ansprüche, wobei das Flüssigkeitszufuhrsystem ferner einen Hauptdurchflussmesser im Hauptrohr und/oder im Zulaufrohr sowie einen Hilfsdurchflussmesser im Hilfsrohr umfasst.

6. Teigherstellungsvorrichtung nach einem der vorhergehenden Ansprüche, wobei das Steuersystem (58) mit einer Vorrichtung zur Zufuhr von pulverförmigem Material verbunden ist und dem die Dosierung des pulverförmigen Materials eingegeben wird, wobei das Steuersystem dazu ausgelegt ist, den Behälter mit der Dosierung des pulverförmigen Materials zu befüllen.

7. Teigherstellungsvorrichtung nach einem der vorhergehenden Ansprüche, wobei die Vorrichtung zur Zufuhr von pulverförmigem Material einen Speicher (12) zum Speichern einer Charge pulverförmigen Materials (P), einen Förderer (32) zum Fördern der Charge pulverförmigen Materials (P) zum Behälter (35) sowie eine Waage (30) zum Erfassen eines Gewichts der Charge pulverförmigen Materials (P) umfasst, wobei die Waage vorteilhafterweise mit dem Steuersystem verbunden ist und wobei das Steuersystem dazu ausgelegt ist, den Speicher mit der Dosierung des pulverförmigen Materials zu befüllen.

8. Verfahren zur Herstellung eines Teigs (B) zum Beschichten eines Lebensmittels mittels einer Teigherstellungsvorrichtung (2) nach einem der vorhergehenden Ansprüche, wobei das Verfahren die folgenden Schritte umfasst:
a1) Zuführen (S1) frischer Flüssigkeit (F) zum Behälter (35) über das Hauptrohr (66) zum Vorbefüllen des Behälters (35), gefolgt von
a2) Zuführen (S2) frischer Flüssigkeit (F) zum Behälter (35) ausschließlich über das Hilfsrohr (67) zum Endbefüllen des Behälters (35), bis die vorgegebene Menge frischer Flüssigkeit im Behälter (35) erreicht ist,
b) Zuführen (S3) der Dosierung des pulverförmigen Materials (P) zum Behälter (35), und
c) Vermischen (S4) der frischen Flüssigkeit (F) mit dem pulverförmigen Material (P) mittels des Rührwerks (38) zur Bildung des Teigs (B).

9. Verfahren nach Anspruch 8, wobei vor Schritt b) die Dosierung des pulverförmigen Materials bestimmt wird, gefolgt von der auf dieser Basis erfolgenden Bestimmung der vorgegebenen Menge frischer Flüssigkeit.

## Revendications

1. Dispositif de production de pâte à frire (2) destiné à produire une pâte à frire en mélangeant un liquide frais (F) et un matériau pulvérulent (P) pour former une pâte à frire (B) destinée à enrober un produit alimentaire, comprenant :
• un récipient (35) destiné à recevoir une quantité prédéfinie de liquide frais (F) et une dose de matériau pulvérulent (P),
• un agitateur (38) qui est installé dans ou sur le récipient et immergé dans le récipient (35) pour mélanger le liquide frais (F) et le matériau pulvérulent (P) afin de former la pâte à frire (B),
• un système d'alimentation en liquide (52) pour fournir la quantité prédéfinie de liquide frais (F) au récipient (35), comprenant :
∘ un tube d'alimentation en amont (53) pour l'alimentation en liquide frais,
∘ un tube principal en aval doté d'une première sortie (66) et d'une vanne principale (62) associée destiné à recevoir le liquide frais provenant du tube d'alimentation (53) et à déverser dans le récipient (35),
∘ un débitmètre (55) destiné à déterminer la quantité de liquide frais qui s'écoule,
• un système de commande (58) relié à la vanne principale et au débitmètre et dans lequel la quantité prédéfinie de liquide frais (F) est introduite, lequel système de commande permet de remplir le récipient avec la quantité prédéfinie de liquide frais,
**caractérisé en ce que** le système d'alimentation en liquide comprend en outre un tube auxiliaire en aval doté d'une seconde sortie (67) et d'une vanne auxiliaire (63) associée recevant également du liquide frais provenant du tube d'alimentation (53) et déversant dans le récipient (35), le tube auxiliaire ayant une section transversale inférieure à celle du tube principal et/ou la vanne auxiliaire ayant une section transversale de déversement inférieure à celle de la vanne principale, de sorte que, lors de l'utilisation, du liquide frais soit déversé de la première sortie à un premier débit volumétrique et de la seconde sortie à un second débit volumétrique qui est inférieur au premier débit volumétrique, la vanne auxiliaire étant également reliée au système de commande, et la vanne principale et la vanne auxiliaire pouvant fonctionner indépendamment l'une de l'autre,
et le système de commande étant conçu pour provoquer un pré-remplissage du récipient au moins par l'intermédiaire du tube principal (66) et pour provoquer un remplissage d'extrémité du récipient (35) uniquement par l'intermédiaire du tube auxiliaire (67).

2. Dispositif de production de pâte à frire selon la revendication 1, le tube d'alimentation (53) se séparant entre le tube principal doté d'une première sortie (66) et le tube auxiliaire doté d'une seconde sortie (67).

3. Dispositif de production de pâte à frire selon l'une quelconque des revendications précédentes, le tube principal doté d'une première sortie (66) et le tube auxiliaire doté d'une seconde sortie (67) déversant directement dans le récipient.

4. Dispositif de production de pâte à frire selon l'une quelconque des revendications précédentes, le système d'alimentation en liquide comprenant en outre une pompe à liquide principale dans le tube principal et/ou le tube d'alimentation et une pompe à liquide auxiliaire dans le tube auxiliaire.

5. Dispositif de production de pâte à frire selon l'une quelconque des revendications précédentes, le système d'alimentation en liquide comprenant en outre un débitmètre principal dans le tube principal et/ou le tube d'alimentation et un débitmètre auxiliaire dans le tube auxiliaire.

6. Dispositif de production de pâte à frire selon l'une quelconque des revendications précédentes, le système de commande (58) étant en liaison avec un dispositif d'alimentation en poudre et dans lequel la dose de matériau pulvérulent est introduite, lequel système de commande permet de remplir le récipient avec la dose de matériau pulvérulent.

7. Dispositif de production de pâte à frire selon l'une quelconque des revendications précédentes, un dispositif d'alimentation en poudre comprenant un stockage (12) pour stocker un lot de matériau pulvérulent (P), un convoyeur (32) pour transporter le lot de matériau pulvérulent (P) vers le récipient (35) et un dispositif de pesée (30) pour détecter un poids du lot de matériau pulvérulent (P), le dispositif de pesée étant avantageusement relié au système de commande et le système de commande permettant de remplir le réservoir avec la dose de matériau pulvérulent.

8. Procédé de production d'une pâte à frire (B) pour enrober un produit alimentaire au moyen d'un dispositif de production de pâte à frire (2) selon les revendications précédentes, le procédé comprenant les étapes consistant à :
a1) fournir (S1) du liquide frais (F) au récipient (35) par l'intermédiaire du tube principal (66) pour pré-remplir le récipient (35), puis
a2) fournir (S2) du liquide frais (F) au récipient (35) uniquement par l'intermédiaire du tube auxiliaire (67) pour remplir le récipient (35) jusqu'à ce que la quantité prédéfinie de liquide frais dans le récipient (35) soit atteinte,
b) fournir (S3) la dose de matériau pulvérulent (P) au récipient (35), et
c) mélanger (S4) le liquide frais (F) avec le matériau pulvérulent (P) au moyen de l'agitateur (38) pour former la pâte à frire (B).

9. Procédé selon la revendication 8, avant l'étape b), la dose de matériau pulvérulent étant déterminée, puis, sur la base de cela, la quantité prédéfinie de liquide frais étant déterminée.
